# EUROPEAN PATENT SPECIFICATION

(11) **EP 3 899 340 B1**
(45) Date of publication and mention of the grant of the patent: **08.10.2025**
(21) Application number: 19831811.5
(22) Date of filing: 18.12.2019
(51) Int. Cl.: F16L 11/08, G01M 3/40, G01M 3/18, F16L 101/30, F16L 11/20

(54) **PIPELINE APPARATUS AND CORRESPONDING METHOD OF MONITORING AND FORMING**
PIPELINE-VORRICHTUNG UND ENTSPRECHENDES VERFAHREN ZUM ÜBERWACHEN UND BILDEN
APPAREIL DE PIPELINE ET PROCEDE CORRESPONDANT DE SURVEILLANCE ET DE FORMATION

(30) Priority: 20.12.2018 GB 201820787
(43) Date of publication of application: 27.10.2021
(73) Proprietor: Baker Hughes Energy Technology UK Limited, Bristol BS48 1BS (GB)
(72) Inventor: MCNAB, John, Newcastle upon Tyne Tyne and Wear NE6 3PF (GB); NOTT, Philip, Newcastle upon Tyne Tyne and Wear NE6 3PF (GB); MCCORMICK, Andrew, Newcastle upon Tyne Tyne and Wear NE6 3PF (GB); DODDS, Neville, Newcastle upon Tyne Tyne and Wear NE6 3PF (GB)
(74) Representative: Novagraaf Group
(86) International application number: PCT/GB2019/053610
(87) International publication number: WO 2020/128470

(56) References cited:
- EP-A1- 2 379 924
- EP-A1- 2 706 338
- WO-A1-2017/137685
- CN-Y- 201 364 364
- US-A- 5 389 097
- US-A1- 2016 273 994

## Description

The present invention relates to pipeline defect monitoring. In particular, but not exclusively, the present invention relates to a pipeline apparatus including a measurement device arranged to detect possible armour wire defects.

Traditionally flexible pipe is utilised to transport production fluids, such as oil and/or gas and/or water, from one location to another. Flexible pipe is particularly useful in connecting a sub-sea location (which may be deep underwater) to a sea level location. The pipe may have an internal diameter of typically up to around 0.6 metres (e.g. diameters may range from 0.05 m up to 0.6 m). Flexible pipe is generally formed as an assembly of a flexible pipe body and one or more end fittings. The pipe body is typically formed as a combination of layered materials that form a pressure-containing conduit. The pipe structure allows large deflections without causing bending stresses that impair the pipe's functionality over its lifetime. The pipe body is generally built up as a combined structure including polymer, and/or metallic, and/or composite layers. For example, a pipe body may include polymer and metal layers, or polymer and composite layers, or polymer, metal and composite layers.

API Recommended Practice 17B provides guidelines for the design, analysis, manufacture, testing, installation, and operation of flexible pipes and flexible pipe systems for onshore, subsea and marine applications.

API Specification 17J titled "Specification for Unbonded Flexible Pipe" defines the technical requirements for safe, dimensionally and functionally interchangeable flexible pipes that are designed and manufactured to uniform standards and criteria.

In many known flexible pipe designs the pipe body includes one or more pressure armour layers. The primary load on such layers is formed from radial forces. Pressure armour layers often have a specific cross section profile to interlock so as to be able to maintain and absorb radial forces resulting from outer or inner pressure on the pipe. The cross-sectional profile of the wound wires which thus prevent the pipe from collapsing or bursting as a result of pressure are sometimes called pressure-resistant profiles. When pressure armour layers are formed from helically wound wires forming hoop components, the radial forces from outer or inner pressure on the pipe cause the hoop components to expand or contract, putting a tensile load on the wires.

In many known flexible pipe designs the pipe body includes one or more tensile armour layers. The primary loading on such a layer is tension. In high pressure applications, such as in deep and ultra deep water environments, the tensile armour layer experiences high tension loads from a combination of the internal pressure end cap load and the self-supported weight of the flexible pipe. This can cause failure in the flexible pipe since such conditions are experienced over prolonged periods of time.

Unbonded flexible pipe has been used for deep water (less than 3,300 feet (1,005.84 metres)) and ultra deep water (greater than 3,300 feet) developments. It is the increasing demand for oil which is causing exploration to occur at greater and greater depths where environmental factors are more extreme. For example, in such deep and ultra-deep water environments ocean floor temperature increases the risk of production fluids cooling to a temperature that may lead to pipe blockage. Increased depths also increase the pressure associated with the environment in which the flexible pipe must operate. For example, a flexible pipe may be required to operate with external pressures ranging from 0.1 MPa to 30 MPa acting on the pipe. Equally, transporting oil, gas or water may well give rise to high pressures acting on the flexible pipe from within, for example with internal pressures ranging from zero to 140 MPa from bore fluid acting on the pipe. As a result, the need for high levels of performance from the layers of the flexible pipe body is increased.

Flexible pipe may also be used for shallow water applications (for example less than around 500 metres depth) or even for shore (overland) applications.

One way to improve the load response and thus performance of armour layers is to manufacture the layers from thicker and stronger and thus more robust materials. For example, for pressure armour layers in which the layers are often formed from wound wires with adjacent windings in the layer interlocking, manufacturing the wires from thicker material results in the strength increasing appropriately. However, as more material is used the weight of the flexible pipe increases. Ultimately the weight of the flexible pipe can become a limiting factor in using flexible pipe. Additionally, manufacturing flexible pipe using thicker and thicker material increases material costs appreciably, which is also a disadvantage.

Regardless of measures taken to improve the performance of armour layers within a pipe body, there remains a risk of defects arising within a flexible pipe. A defect may comprise damage to an outer wall of a flexible pipe body resulting in the ingress of seawater into an annulus within the pipe body such that seawater fills voids between the armour layer wires and other structural elements of the pipe. Alternatively, or additionally, gas may be leaked into the armour layer, including corrosive gases which cause degradation of the armour layer wires. Armour layer wires and other structural elements are typically manufactured from steel or other metallic materials, which are vulnerable to accelerated corrosion upon contact with seawater and corrosive gases. Hydrogen sulphide leaks within the annulus may cause sulphide stress cracking and high levels of carbon dioxide may cause stress corrosion cracking at the wire surface. If such a defect is not detected promptly then the structural integrity of the pipe body can be compromised. Detection of defects has previously often required visual inspection of the pipe body, which can be hazardous, particular for deep water and ultra-deep water installations.

EP 2 706 338 A1 describes a detection apparatus arranged to detect defects within a flexible pipe body comprises a signal generator, a receiver, a correlator and a processor. WO 2017/137685 A1 describes an assembly comprising a pipe provided with a pair of electrically conductive wires in which wear is to be detected and a connector for connecting the pipe to a wear-detection system.

Certain examples of the disclosure provide the advantage that a defect within a pipe body or corrosion of a tensile armour wire can be detected without requiring periodic visual inspection. Defects can then be repaired, or the pipe body replaced. Detectable defects include corrosion of the metallic tensile armour wires. Certain examples can also provide an indication of changes in the condition of the pipe body over the lifetime of the pipe, for example by measuring a condition of the tensile armour wires over time and using said measurements to predict future corrosion of the tensile armour wires.

The invention is defined in the appended claims. According to the disclosure there is provided a pipeline apparatus comprising: a pipe body including: an annular cavity between annular innermost and outermost fluid impermeable barrier layers; and a plurality of armour wires extending along at least part of the length of the pipe body in the annular cavity, the plurality of armour wires including a first armour wire electrically isolated from the other armour wires along at least part of the length of the armour wires; and a measurement device arranged to electrically couple to the first armour wire at a first end of the pipe body, and to measure the electrical impedance of the first armour wire; wherein variation of the electrical impedance of the first armour wire is indicative of a defect of the first armour wire.

The pipeline apparatus may further comprise at least one insulation member arranged to insulate the first armour wire from the remainder of the plurality of armour wires along at least part of its length.

The measurement device may be configured to supply direct current or variable frequency alternating current to the first armour wire.

The pipeline apparatus may further comprise an end fitting coupled to the first end of the pipe body, wherein the measurement device couples to the first armour wire through the end fitting.

The first armour wire may be electrically connected to at least one other armour wire at a part of the pipe body distal to the first end of the pipe body; wherein the measurement device may be further arranged to electrically couple to the at least one other armour wire at the first end of the pipe body, such that impedance is measured through a circuit comprising the first armour wire and the at least one other armour wire connected in series.

The pipeline apparatus may further comprise sensing wires arranged in a four-terminal sensing configuration, wherein the sensing wires are electrically connected to the first armour wire at the first end of the pipe body and a part of the pipe body distal to the first end of the pipe body, for measuring the impedance of the first armour wire.

The sensing wires may be provided adjacent to and parallel with the first armour wire in the annular cavity.

The measurement device may comprise a current sensor arranged to measure a current through the first armour wire and a voltage sensor arranged to measure a voltage across the first armour wire.

According to the disclosure there is provided a method of monitoring a condition of an armour wire provided in a pipeline apparatus, the method comprising: coupling a measurement device to a first armour wire among a plurality of armour wires extending along at least part of the length of a pipe body in an annular cavity of the pipe body of the pipeline apparatus and electrically isolated from the other armour wires along at least part of the length of the armour wires, the annular cavity being defined between annular innermost and outermost fluid impermeable barrier layers, the measurement device being coupled to the first armour wire at a first end of the pipe body; and measuring the impedance of the first armour wire; wherein variation of the electrical impedance of the first armour wire electrically is indicative of a defect of the first armour wire.

The current supplied to the first armour wire may be direct current or alternating current.

The method may further comprise: varying the frequency of the current supplied to the first armour wire; measuring the impedance of the first armour wire at two or more different frequencies; and determining an impedance profile across the cross section of the first armour wire.

The method may further comprise: determining a rate of change of the impedance of the first armour wire.

The method may further comprise: identifying a type of defect of the first armour wire based on a frequency of alternating current supplied to the first armour wire and the measured impedance of the first armour wire.

According to the disclosure there is provided a method of forming a pipeline apparatus, the method comprising: providing a pipe body including: an annular cavity between annular innermost and outermost fluid impermeable barrier layers; and a plurality of armour wires extending along at least part of the length of the pipe body in the annular cavity, the plurality of armour wires including a first armour wire electrically isolated from the other armour wires along at least part of the length of the armour wires; and coupling a measurement device to the first armour wire at a first end of the pipe body, the measurement device being arranged to measure the electrical impedance of the first armour wire; wherein variation of the electrical impedance of the first armour wire electrically is indicative of a defect of the first armour wire.

The method may further comprise adapting the pipeline apparatus according to any of claims 2 to 8.

Certain examples of the disclosure provide the advantage that corrosion or defects in the pipe body, in particular the tensile armour wires, can be detected without visual inspection of the pipe body, which may be challenging when the pipeline apparatus is employed in environments such as subsea environments.

Certain examples of a pipeline apparatus according to the disclosure provide the advantage that the condition of a tensile armour wire can be monitored with access only being required at one end of the tensile armour wire. This is particularly beneficial in environments where at least part of the tensile armour wire is underwater.

Certain examples of a pipeline apparatus according to the disclosure provide the advantage that impedance of a tensile armour wire can be monitored over time, and the rate of change of impedance over time provides information about a change in conditions inside the pipe body annulus, or a change in the corrosion rate of the tensile armour wires. Such information can be used to improve predictions of the lifetime of the armour wires or the pipe body.

Certain examples of a pipeline apparatus according to the disclosure provide the advantage that sensing wires in a four terminal sensing configuration provide a return path for electrical signals without requiring more than one tensile armour wire to conduct the electrical signal. The impedance of such sensing wires may be low compared to the impedance of the tensile armour wire. The impedance measurement of a circuit including sensing wires and a single tensile armour wire is therefore an accurate indication of the impedance of the tensile armour wire. In addition, the sensing wires may also act to electrically insulate the tensile armour wire from other tensile armour wires, reducing the need to provide additional electrical insulation.

Certain examples of a pipeline apparatus according to the disclosure provide the advantage that the impedance of a first tensile armour wire can be measured at the surface of the tensile armour wire or at a predetermined depth from the surface of the tensile armour wire corresponding to a frequency of an alternating current supplied to the tensile armour wire according to the skin effect. Impedance measurements at different depths may be used to build an impedance profile of the tensile armourwire across its cross section. The variation in impedance at particular depths in the cross section of the tensile armour wire may be indicative of different types of corrosion to the tensile armour wire.

Examples according to the disclosure are further described hereinafter with reference to the accompanying drawings, in which:
Figure 1 illustrates a flexible pipe body;
Figure 2 illustrates a riser assembly incorporating a flexible pipe body;
Figure 3 illustrates a measurement device coupled to a flexible pipe body according to an example pipeline apparatus;
Figure 4 illustrates a measurement device coupled to a flexible pipe body according to an example pipeline apparatus;
Figure 5 illustrates a measurement device coupled to a flexible pipe body according to an example pipeline apparatus;
Figure 6 is a circuit diagram illustrating a circuit configuration of a measurement device coupled to a tensile armour wire in an example of a flexible pipe body;
Figure 7 illustrates the effect of varying frequency of current supplied to a conductor on distribution of current density;
Figure 8 is a flowchart illustrating a monitoring method of an example pipeline apparatus; and
Figure 9 is a flowchart illustrating a monitoring method of an example pipeline apparatus.

In the drawings like reference numerals refer to like parts.

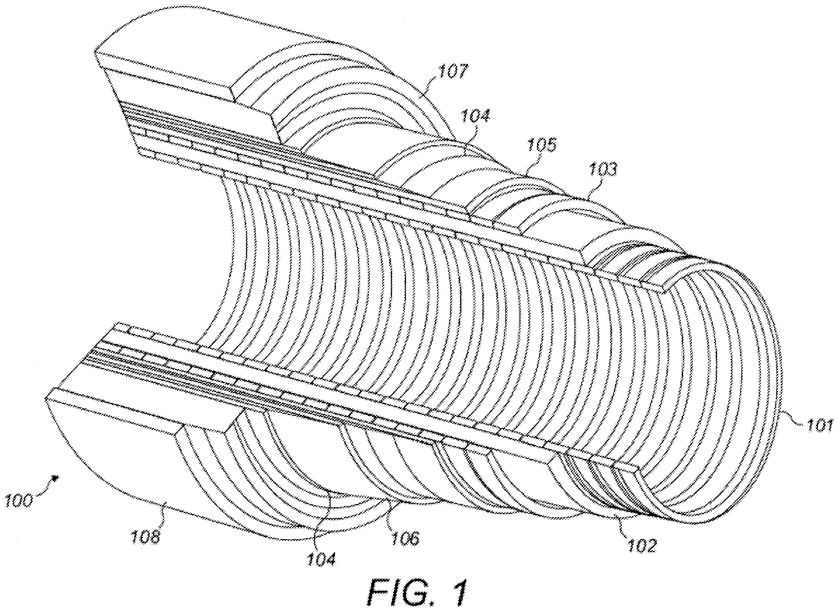

Throughout this description, reference will be made to a flexible pipe. It will be understood that a flexible pipe is an assembly of a portion of pipe body and one or more end fittings in each of which a respective end of the pipe body is terminated. Fig. 1 illustrates an example of how pipe body 100 is formed from a combination of layered materials that form a pressure-containing conduit. Although a number of particular layers are illustrated in Fig. 1, it is to be understood that the pipe body is broadly applicable to coaxial structures including two or more layers manufactured from a variety of possible materials. For example, the pipe body may be formed from polymer layers, metallic layers, composite layers, or a combination of different materials. It is to be further noted that the layer thicknesses are shown for illustrative purposes only. As used herein, the term "composite" is used to broadly refer to a material that is formed from two or more different materials, for example a material formed from a matrix material and reinforcement fibres.

As illustrated in Fig. 1, a pipe body includes an optional innermost carcass layer 101. The carcass provides an interlocked construction that can be used as the innermost layer to prevent, totally or partially, collapse of an internal pressure sheath 102 due to pipe decompression, external pressure, and tensile armour pressure and mechanical crushing loads. The carcass layer is often a metallic layer, formed from stainless steel, for example. The carcass layer could also be formed from composite, polymer, or other material, or a combination of materials. It will be appreciated that certain examples are applicable to 'smooth bore' operations (i.e. without a carcass layer) as well as such 'rough bore' applications (with a carcass layer).

The internal pressure sheath 102 acts as a fluid retaining layer and comprises a polymer layer that ensures internal fluid integrity. It is to be understood that this layer may itself comprise a number of sub-layers. It will be appreciated that when the optional carcass layer is utilised the internal pressure sheath is often referred to by those skilled in the art as a barrier layer. In operation without such a carcass (so-called smooth bore operation) the internal pressure sheath may be referred to as a liner.

An optional pressure armour layer 103 is a structural layer that increases the resistance of the flexible pipe to internal and external pressure and mechanical crushing loads. The layer also structurally supports the internal pressure sheath, and typically may be formed from an interlocked construction of wires wound with a lay angle close to 90°. The pressure armour layer is often a metallic layer, formed from carbon steel, for example. The pressure armour layer could also be formed from composite, polymer, or other material, or a combination of materials.

The flexible pipe body also includes an optional first tensile armour layer 105 and optional second tensile armour layer 106. Each tensile armour layer is used to sustain tensile loads and internal pressure. The tensile armour layer is often formed from a plurality of wires (to impart strength to the layer) that are located over an inner layer and are helically wound along the length of the pipe at a lay angle typically between about 10° to 55°. The tensile armour layers are often counter-wound in pairs. The tensile armour layers are often metallic layers, formed from carbon steel, for example. The tensile armour layers could also be formed from composite, polymer, or other material, or a combination of materials.

The flexible pipe body shown also includes optional layers of tape 104 which help contain underlying layers and to some extent prevent abrasion between adjacent layers. The tape layer may be a polymer or composite or a combination of materials.

The flexible pipe body also typically includes optional layers of insulation 107 and an outer sheath 108, which comprises a polymer layer used to protect the pipe against penetration of seawater and other external environments, corrosion, abrasion and mechanical damage.

The tensile armour layer may have an annular shape and may be referred to as an annular layer or as an annular cavity. The tensile armour wires may be formed of an electrically conductive material, and may otherwise be known as electrically conductive members.

Each flexible pipe comprises at least one portion, sometimes referred to as a segment or section of pipe body 100 together with an end fitting located at least one end of the flexible pipe. An end fitting provides a mechanical device which forms the transition between the flexible pipe body and a connector. The different pipe layers as shown, for example, in Fig. 1 are terminated in the end fitting in such a way as to transfer the load between the flexible pipe and the connector.

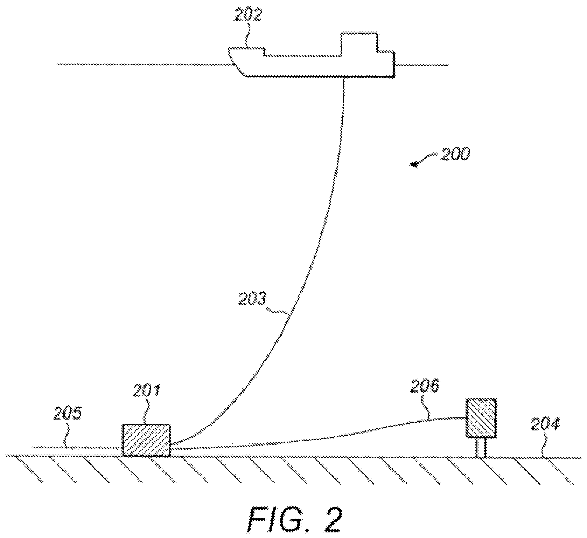

Fig. 2 illustrates a riser assembly 200 suitable for transporting production fluid such as oil and/or gas and/or water from a sub-sea location 201 to a floating facility. For example, in Fig. 2 the sub-sea location 201 includes a sub-sea flow line. The flexible flow line 205 comprises a flexible pipe, wholly or in part, resting on the sea floor 204 or buried below the sea floor and used in a static application. The floating facility may be provided by a platform and/or buoy or, as illustrated in Fig. 2, a ship 200. The riser assembly 200 is provided as a flexible riser, that is to say a flexible pipe 203 connecting the ship to the sea floor installation. The flexible pipe may be in segments of flexible pipe body with connecting end fittings.

It will be appreciated that there are different types of riser, as is well-known by those skilled in the art. Example pipeline apparatuses may be used with any type of riser, such as a freely suspended (free, catenary riser), a riser restrained to some extent (buoys, chains), totally restrained riser or enclosed in a tube (I or J tubes).

Fig. 2 also illustrates how portions of flexible pipe can be utilised as a flow line 205 or jumper 206.

The pipe body annulus is occupied by metallic structural components such as the tensile armour layers 105, 106 of Fig. 1. Such components are frequently formed from steel or other metals and are susceptible to rapid corrosion in the presence of seawater or gases such as hydrogen sulphide, which may cause sulphide stress cracking, and carbon dioxide, which may cause stress corrosion cracking at the surface of the metallic components such as the tensile armour layers or armour wires.

There will now be described examples of a pipeline apparatus including a flexible pipe body and a measurement device, which can monitor the condition of an armour wire within the annulus of the flexible pipe body, which may be indicative or corrosion or defects of the armour wires. Such examples offer a means of monitoring for early pipe failure. Certain examples provide a means for targeting particular layers of the tensile armour wires or building a profile across the entire cross section of a tensile armour wire. Corrosion of the flexible tensile armour wires can be monitored and predicted over the life of the pipe in service.

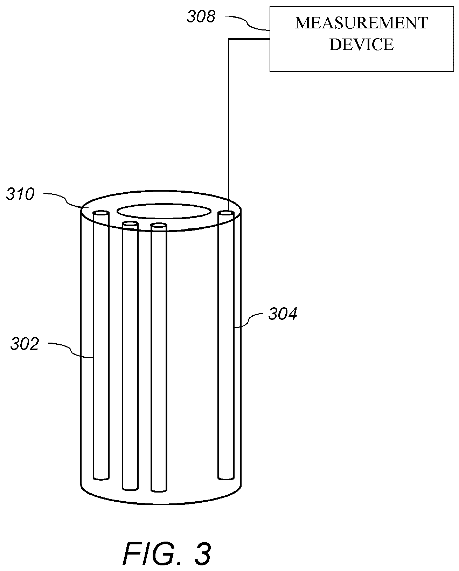

Figure 3 illustrates an expanded perspective view of a pipe body including an annular armour cavity 310, or annular layer, which comprises a plurality of tensile armour wires 302, including a first tensile armour wire 304. A measurement device 308 is arranged to couple to the first tensile armour wire304 at a first end of the pipe body.

Fig. 3 shows a flexible pipe, which as discussed above may form a riser. The pipe is at least partially surrounded by seawater. The metallic structural elements, for instance the tensile armour layers 105, 106 of Fig. 1, are designed to satisfy purely mechanical properties of the structure of the pipe body. However, provided at least two of the metallic components, for instance individual tensile armour wires or separate armour wire layers as shown in Fig. 3, are electrically isolated from each other by an insulating medium, for instance the tape layers 104 of Fig. 1, then it can be considered that those components are electrically conductive members extending at least partially along the length of a flexible pipe body. That is, the tensile armour wires 302, 304 may conduct electrical signals and may form part of a circuit. The tensile armour wires 302, 304 will also have an associated electrical resistance or impedance. It will be understood by the person skilled in the art that an electrical current may be supplied to the tensile armour wires 302, 304 and conducted through the tensile armour wires 302, 304. In one example, the tensile armour wires 302, 304 may also be isolated from one another along the length of the pipe body. In some examples, this may be achieved by providing insulating members, such as flexible polymer rods, along the length of the pipe body between the tensile armour wires 302, 304. It will be appreciated that any suitable means or materials may be used for electrically isolating one of a plurality of armour wires.

The measurement device 308 is configured to measure the impedance of the first tensile armour wire 304. Although this description refers to measurements of impedance, the person skilled in the art will understand that measurements of resistance may also be taken by such a device, and that resistance and impedance are properties distinguished by the nature of the current flowing through a conductive material.

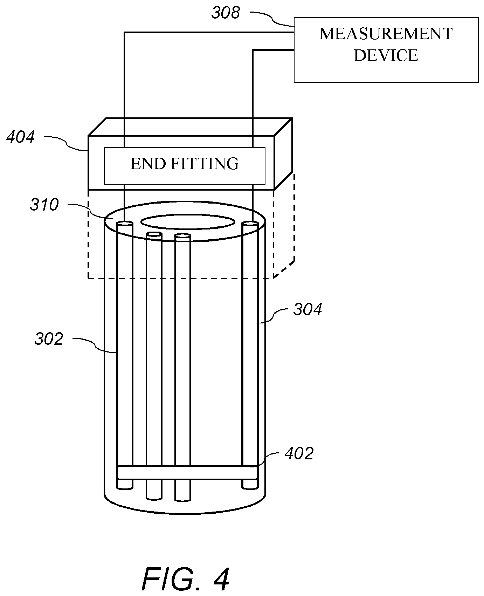

The measurement device 308 may be any known impedance measurement device, and couples to the first tensile armour wire 304. In some examples, the measurement device 308 couples to the first tensile armour wire 304 at the first end of the pipe body. In particular, this coupling may be provided at an end fitting, which will be discussed more in relation to Figure 4. In some examples, the measurement device 308 may be a portable handheld unit that is removably connectable to the first tensile armour wire 304, such that measurements of the impedance of the first tensile armour wire 304 may be taken with ease at the first end of the pipe body, and then the measurement device 308 may be removed and used to take measurements of impedance of other tensile armour wires or other tensile armour wires of other pipes. Alternatively, the measurement device 308 may be coupled to the first tensile armour wire 304 for an extended time or permanently and used to take continuous or periodic measurements of the impedance of the first tensile armour wire 304.

The measurement device 308 may be arranged to supply an electrical current to the first tensile armour wire 304, or an electrical current may be supplied to the first tensile armour wire 304 by a separate device. The electrical current may be supplied as direct current (DC) or alternating current (AC). The electrical current may be supplied continuous or a pulse may be supplied. The frequency of the electrical current supplied may be varied. In some examples the electrical current and/or electrical voltage applied to the first armour wire may be kept relatively low in order to avoid interfering with the normal functions of the pipeline.

The measurement device 308 may include its own processor which is arranged to generate and output electrical signals, and to measure impedance and output the measured impedance values. Alternatively, a separate processor may be provided for the measurement of impedance and/or outputting the measured impedance values. In either example, the measurement device 308 may be controlled to take periodic or single impedance measurements, and to supply electrical current at a variety of frequencies. Further, the measurement device 308 may be arranged to monitor impedance values over time, and trigger an alarm or output a message if impedance varies by an amount greater than a predetermined threshold.

The impedance of the first tensile armour wire 304 is indicative of corrosion or defects of the first tensile armour wire 304, which itself is indicative of corrosion or defects of each of the other tensile armour wires, which are exposed to similar conditions and assumed to corrode or become damaged in a similar manner. For example, the impedance of a new tensile armour wire, or tensile armour wires, may be known or measured at the time of installation of a new pipeline apparatus or pipe body. The impedance of first tensile armour wire 304 may be monitored.

Changes in the impedance of first tensile armour wire 304 are indicative of corrosion of the first tensile armour wire 304, as corrosion of the surface of the wires due to causes such as gas leaks leads to cracks and pitting of the surface of the wires, which changes the electrical properties of the wire. Therefore, a change in the impedance of first tensile armour wire 304 is indicative of a change in the condition of the first tensile armour wire 304, for example due to corrosion of the first tensile armour wire 304. Corrosion of the first tensile armour wire 304, or indeed other changes in its condition, may serve to change the effective cross-sectional area of the first tensile armour wire 304. Particularly, corrosion may reduce the cross-sectional area of the first tensile armour wire 304 which may cause a proportional increase in impedance. For a particular type of tensile armour wire this proportional increase in impedance may be quantified and used in a test situation to estimate the reduction in cross-sectional area, and hence estimate the effect of corrosion.

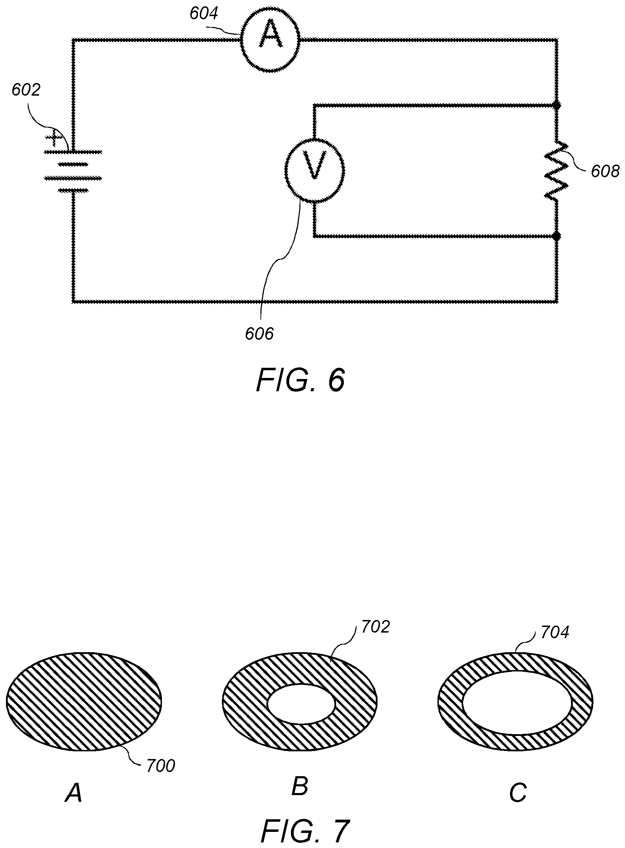

In some examples, different types of corrosion or defect may be identified by the change in impedance of the first tensile armour wire 304, as a particular type of corrosion or extent of corrosion may be associated with a known impedance change. This association may be based on historical, experimental or theoretical data used to model impedance changes of tensile armour wires due to varying levels of corrosion. As will be discussed with reference to Figure 7, a particular layer or depth of the tensile armour wires across their cross-sectional area may be targeted using specific frequency AC pulses.

The measurement device 308 may be a highly accurate milliohm meter to measure small changes in impedance of the first tensile armour wire 304.

Figure 4 illustrates an example pipeline apparatus. The pipeline apparatus includes a pipe body including an annular cavity 310, which houses tensile armour wires 302, 304. The pipe body terminates at an end fitting 404, through which a measurement device 308 may be coupled to the tensile armour wires 302, 304. The pipeline apparatus of Figure 4 is substantially the same as that of Figure 3, and so a description of common components will be omitted for brevity.

The pipeline apparatus of Figure 4 also comprises a conductive element 402 arranged to electrically connect, or short, the first tensile armour wire 304 to at least one other tensile armour wire 302. In some examples, the conductive element 402 may be a metal rod such as a steel rod provided to connect between the first tensile armour wire 304 and at least one other tensile armour wire 302. The conductive element 402 may electrically connect the first tensile armour wire 304 with all other tensile armour wires in the pipe body, or to a plurality of the other tensile armour wires. In some examples, the conductive element 402 may not be provided as a rod as such, but may be implemented as a conductive disc or plate arranged to electrically connect between the tensile armour wires. Alternatively, an end fitting at the end of the pipe body distal from the measurement device may comprise the conductive element 402.

The measurement device 308 is also coupled to the at least one other tensile armour wire 302 which is connected to the first tensile armour wire 304 via the conductive element 402. The measurement device 308 may be coupled to the at least one other tensile armour wire 302 at a first end of the pipe body. This may be the same end of the pipe body as with the coupling of the measurement device 308 to the first tensile armour wire 304. In some examples, the measurement device 308 may couple to the at least one other tensile armour wire 302 through an end fitting 404, as described below.

The conductive element 402 is arranged to electrically connect, or short the first tensile armour wire 304 to at least one other tensile armour wire, thereby forming a circuit that includes the first tensile armour wire 304 and at least one other tensile armour wire, the conductive element 402, and the measurement device 308.

The conductive element 402 may be provided at an end of the pipe body distal to the end of the pipe body where the measurement device 308 connects to the first tensile armour wire 304. The circuit formed by connecting the first tensile armour wire 304 with at least one other tensile armour wire 302 may therefore include substantially the entire length of the first tensile armour wire 304. In another example, the conductive element 402 may be provided at another point along the pipe body.

The measurement device 308 is arranged to measure the impedance of the circuit. In particular, an electrical signal may be supplied to the circuit by either the measurement device 308 or a separate component. The measurement device 308, being electrically connected between the first tensile armour wire 304 and at least one other tensile armour wire 302, is adapted to measure the impedance of the circuit. The impedance measurement is indicative of corrosion to the first tensile armour wire 304. Although each of the tensile armour wires may corrode, in a case where the first tensile armour wire 304 is electrically connected to a plurality of other tensile armour wires, the impedance contribution of the first tensile armour wire 304 will dominate the measurement as there may be a significant number of armour wires in the return bundle. The impedance of the circuit therefore approximates the impedance of the first tensile armour wire 304. As discussed above, this is indicative of damage or corrosion to the first tensile armour wire 304, and by association, the other tensile armour wires.

The end fitting 404 of the flexible pipe may be used for connecting segments of flexible pipe body together or for connecting them to terminal equipment such as a rigid sub-sea structures or floating facilities. As such, amongst other varied uses, flexible pipe can be used to provide a riser assembly for transporting fluids from a sub-sea flow line to a floating structure. In such a riser assembly a first segment of flexible pipe may be connected to one or more further segments of flexible pipe. Each segment of flexible pipe includes at least one end fitting 404.

The measurement device 308 may connect to the first tensile armour wire 304 through the end fitting 404.

The end fitting 404 includes an end fitting body, which includes an internal bore running along its length. The end fitting body is made from steel or other such rigid material. At an end of the end fitting body is a connector. The connector can be connected directly to a matching connector of a further end fitting body of an adjacent segment of flexible pipe body. This can be done using bolts or some other form of securing mechanism. Alternatively, the connector may be connected to a floating or stationary structure such as a ship, platform or other such structure. Various layers of flexible pipe body are introduced to the end fitting assembly, cut to appropriate length, and engaged with a particular portion of the end fitting 404 such that the pipe body and the end fitting 404 are sealed together. Examples of end fitting configurations can be seen in EP1867906 and EP2864749.

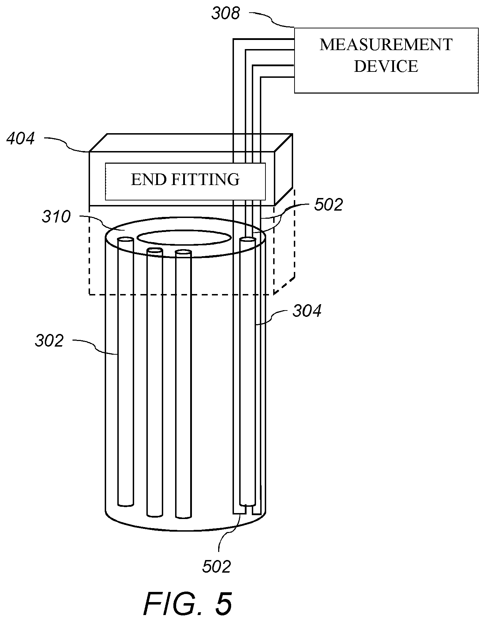

Figure 5 illustrates another example pipeline apparatus. In Figure 5, the pipeline apparatus is provided without a conductive element to short the first tensile armour wire 304 to the other tensile armour wires. Instead, a circuit is formed by providing separate electrical sensing wires 502 to connect to both ends of the first tensile armour wire 304. In some examples, the first tensile armour wire 304 is isolated from other tensile armour wires along the entire length of the pipe body. In another example, the tensile armour wires 302, 304 are electrically connected by shorting rods or bands provided at the end of the pipe body distal to the end fitting 404 formed at manufacture. In this case, the sensing wires 502 may be connected to the first tensile armour wire 304 at the end fitting 404 and substantially at the other end of the pipe body, before the first tensile armour wire 304 is electrically connected to the other tensile armour wires.

The sensing wires 502 may be insulated and used to electrically isolate the first tensile armour wire 304 from other tensile armour wires along the length of the pipe body. This may be provided in place of the insulation discussed with reference to Figures 3 and 4, or as additional insulation between the first tensile armour wire 304 and the remaining tensile armour wires.

The sensing wires 502 are provided in an extended four wire (or four terminal, or Kelvin measurement) configuration, as is explained in greater detail with reference to the circuit diagram of Figure 6. In this case, the impedance of the first tensile armour wire 304 is measured by measuring both the current through the first tensile armour wire 304 and the voltage across it. In this example, the measurement device 308 may comprise both an ammeter and a voltmeter. This circuit configuration is known to provide highly accurate impedance measurements.

As shown in Figure 5, the sensing wires 502 are arranged to provide two connections at each end of the first tensile armour wire 304.

Advantageously, the example pipeline apparatus of Figure 5 provides highly accurate impedance measurements of the first tensile armour wire 304, without the need for a return path through the other tensile armour wires. Therefore a measurement of impedance taken by the measurement device 308 in the example of Figure 5 is a true measurement of the impedance of the first tensile armour wire 304, and is not affected by the condition of other tensile armour wires. Further, the sensing wires 502 provide electrical isolation of the first tensile armour wire 304 from the other tensile armour wires, thus reducing the manufacturing requirements of the pipe body by reducing the need for single purpose insulating rods.

The sensing wires 502 of Figure 5 may have a low impedance compared to that of the tensile armour wires such as first armour wire 304. Therefore, as will be discussed in greater detail with reference to Figure 6, the example arrangement of Figure 5 provides a means of obtaining accurate impedance measurements of the first armour wire 304.

Figure 6 is a circuit diagram showing the configuration of the circuit of Figure 5. The circuit includes a power supply 602, an ammeter 604, a voltmeter 606 and a subject 608 having some resistance. The power supply 602, ammeter 604 and voltmeter 606 may all be implemented as part of the measurement device 308 or may be separate devices. The subject 608 is shown as a resistor in Figure 6, but in the context of the present disclosure may comprise the first tensile armour wire 304, as it is the entity for which the resistance or impedance is calculated. It is known that the resistance or impedance of the subject 608 may be calculated by dividing the voltmeter 606 measurement by the ammeter 604 measurement.

The ammeter 604 is provided in series with the subject 608 to measure the current through the circuit. The voltmeter 606 is arranged to measure the voltage across the subject 608. Although the wires connecting the voltmeter 606 to the subject 608 will introduce resistance into the circuit, these wires carry a small amount of current, and thus the voltmeter 606 indication is highly accurate. Further, a voltage drop across the main current carrying electrical wires connected between the power supply 602, ammeter 604 and subject 608 is not measured by the voltmeter 606, and consequently are not factored into a resistance calculation. Therefore, advantageously this circuit provides a means for measuring the resistance or impedance of a subject 608 located at a distance to the voltmeter 606 and the ammeter 604. That is, both the ammeter 604 and the voltmeter 606 may be provided at a distance to the subject 608 without introducing large errors in impedance measurement of the subject 608 due to the use of long wires. In the context of Figure 5 and the present disclosure, this means that the measurement device 308 which comprises the ammeter 604 and the voltmeter 606 may be provided at a distance to the first tensile armour wire 304. As is noted above, in the example of Figure 5, the subject 608 may be the first tensile armour wire 304. The impedance of the first tensile armour wire 304 can therefore be measured with a high accuracy even with access to only one end of the first tensile armour wire 304 at the end fitting 404, if the electrical wires 502 are already in place. There is therefore a reduced need to remove the pipe body or use subsea monitoring techniques to monitor the condition of the pipe body, and in particular the tensile armour wires.

The skilled person will be aware that the circuit of Figure 6 is shown in a simple form for understanding, and can be further adapted or improved by introducing additional components or arranging the connectors between components differently. For example, accuracy errors may be reduced by replacing the ammeter with a standard resistor used as a current measuring shunt, or using known Kelvin clips.

Figure 7 shows an illustration of how the skin-effect may be used to target monitoring of the first tensile armour wire 304. According to the skin effect, when an alternating current flows through a conductor, the current density is largest near the surface of the conductor, decreasing with depth toward the centre of the conductor, with the electric current flowing mainly in a layer between the surface of the conductor and a level known as the skin depth. The skin effect is due to opposing currents induced by the changing magnetic field resulting from the alternating current. At higher frequencies, the opposing current becomes greater and the skin depth becomes reduced. In contrast, when a direct current flows through a conductor, the current density is approximately uniform throughout the conductor.

Figure 7 shows three example cross sections of the first tensile armour wire 304 supplied with differing electrical current. An area 700, 702, 704 is shown for each by diagonal lines in which area the current density is greatest. Measuring the impedance of the first tensile armour wire 304 is indicative of the condition of the first tensile armour wire 304 or corrosion of it in the band or cross-sectional area in which the current density is highest.

In example A, a direct current is supplied to the first tensile armour wire 304 and the current density is equally distributing across the cross section of the first tensile armour wire 304, resulting in an area 700 that is equal to the cross section of the first tensile armour wire 304. Therefore, if it is desired to monitor the overall or average impedance of the first tensile armour wire 304 across its entire cross section (and therefore an average indication of corrosion or the condition of the wire), then a direct current is supplied to the first tensile armour wire 304.

In example B of Figure 7, an alternating current is supplied to the first tensile armour wire 304, and due the skin effect, the current density is greatest in a cross-sectional area 702, formed as a ring or disc excluding a central portion of the first tensile armour wire 304. Therefore, an alternating current may be supplied to the first tensile armour wire 304 in order to monitor the impedance and thereby the condition of the first tensile armour wire 304 for a particular layer or depth of the wire.

In example C of Figure 7, an alternating current of a higher frequency than example B is supplied to the first tensile armour wire 304. This results in a smaller area 704 than the area 702 of example B, where the current density is highest in a narrower band nearer to the surface of the first tensile armour wire 304. Therefore, the frequency of an alternating current supplied to the first tensile armour wire 304 may be increased in order to target impedance measurements to a layer nearer the surface of the first tensile armour wire 304.

As shown in Figure 7, the impedance of the first tensile armour wire 304 at a particular depth from the surface can be measured by supplying a particular frequency alternating current to the first tensile armour wire 304. Advantageously, monitoring for particular types of corrosion may be performed by targeting a known depth of the first tensile armour wire 304. Additionally, the depth or extent of cracks, pitting or corrosion of the surface of the tensile armour wires may be approximated by taking a plurality of impedance measurements at increasing or decreasing depths from the surface of the first tensile armour wire 304. An impedance profile of the first tensile armour wire 304 may be constructed by taking a plurality of impedance measurements with varying frequency of supplied electric current.

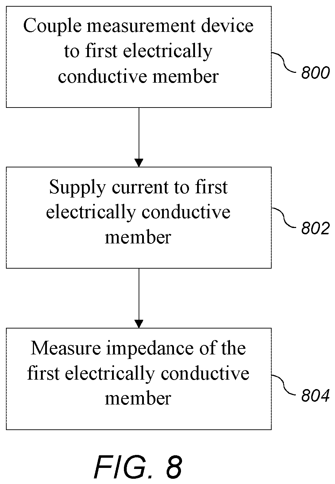

Figure 8 is a flowchart showing a method of monitoring the condition of a tensile armour wire according to one example. For example, this method may be used with any of Figures 3 to 5 to measure the impedance of the first tensile armour wire 304, and the impedance measurement or a variation in the impedance measurement compared with previous measurements or a known value is indicative of damage or corrosion to the first tensile armour wire 304.

The method begins at step 800, with coupling a measurement device such as measurement device 308 of figure 3 to the first tensile armour wire 304. At step 802, electric current is supplied to the first tensile armour wire 304. The electric current may be direct current or alternating current, and may be supplied at a particular frequency if it is desired to measure the impedance of the first tensile armour wire 304 at a particular depth from the surface of the first tensile armour wire 304.

At step 804, the impedance of the first tensile armour wire 304 is measured. This may be performed as in Figure 4, forming a circuit by shorting the first tensile armour wire 304 to at least one other tensile armour wire at an end of the pipe body distal to the end fitting 404 in order to create a return path for the electric current to the measurement device 308. Alternatively, the measurement may be taken as in the example of Figure 5, by using a four-wire return sensing configuration to complete a circuit without the need for a return path through other tensile armour wires.

The measured impedance may then be compared with previous measurement of impedance. A change in the impedance of the first tensile armour wire 304 is indicative of corrosion to the first tensile armour wire 304, for example due to a gas leak. Alternatively, or additionally, the measured impedance may be compared with an expected value based on the age of the first tensile armour wire 304 or pipe body.

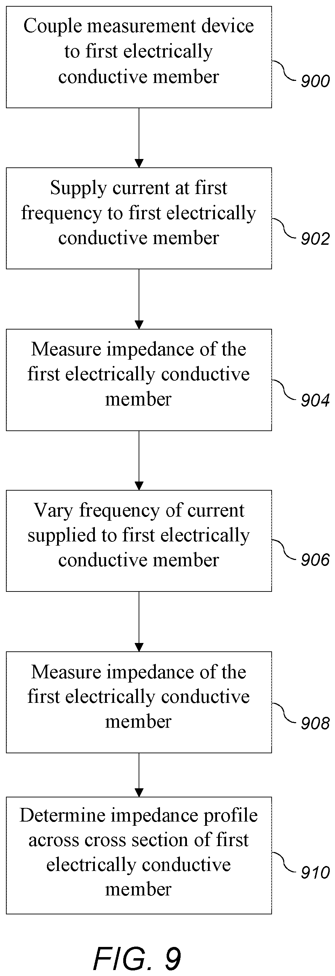

Figure 9 is a flowchart showing a method of monitoring the condition of a tensile armour wire according to another example. For example, this method may be used with any of figures 3 to 5 to measure the impedance of the first tensile armour wire 304.

At step 900, a measurement device such as measurement device 308 of figure 3 is coupled to the first tensile armour wire 304 at the end fitting 404 of a pipe body. Electrical current at a first frequency is supplied to the first tensile armour wire 304 at step 902. The measurement device 308 then measures the impedance of the first tensile armour wire 304 at step 904. Depending on the frequency of the electrical current supplied at step 902, the measured impedance is indicative of the condition of the first tensile armour wire 304, for example including any corrosion of the first tensile armour wire 304, at a depth of the first tensile armour wire 304 across its cross-sectional area.

At step 906, the frequency of the current supplied to the first tensile armour wire 304 is varied. For example, the frequency of an alternating current may be increased or decreased. The impedance of the first tensile armour wire 304 is measured again at step 908. The impedance measured at the second frequency is indicative of the condition of a different depth of the first tensile armour wire 304, as explained in Figure 7.

At step 910, an impedance profile is determined across the cross section of the first tensile armour wire 304 based on the measured impedance values. Although in Figure 9 only two different frequencies are used and only two impedance measurements are taken, the skilled person would understand that this process could be repeated to obtain more measurements.

The impedance profile may indicate different types of corrosion to the first tensile armour wire 304, as impedance changes at different depths from the surface of the first tensile armour wire 304 may be associated with different types or severity of corrosion. For example, if impedance changes sharply when a high frequency alternating current is used to target the surface level of the first tensile armour wire 304, but impedance remains largely unchanged at a greater depth, the first tensile armour wire 304 may have surface level corrosion only. If impedance is changed from an expected value or previous measurement to a deeper level of the first tensile armour wire 304, the corrosion may be more severe or larger cracks may have formed.

The impedance profile of a tensile armour wire may be monitored and updated over time by taking repeat measurements of the impedance. This enables monitoring of known corrosion to the first tensile armour wire 304, in order to see if the corrosion is becoming worse or if it has stabilised. For example, a rate of corrosion may be predicted at the start of the life of a pipe. This rate of corrosion may be compared to changes in the impedance profile to determine if the tensile armour wires are becoming corroded at a rate that is different to expectations. Early detection of pipe failure is enabled, and models of corrosion can be improved.

Further, the rate of change of impedance may be monitored. The rate of change of impedance is indicative of a rate of corrosion of the tensile armour wires. Thus, predictions can be made as to the time until a threshold corrosion is reached, and repair or replacement of the tensile armour wires is required. Unnecessary maintenance or replacement is avoided. In addition, a change in the rate of change of impedance may indicate that an additional source of corrosion or an additional defect has occurred in the pipe body. For example, a change in the rate of change of impedance may indicate a gas leak or the ingress of water into the annulus of the flexible pipe.

The examples described above assume that the annulus is dry. However, due to leaks or other defects, seawater may leak into the annulus layer and be in contact with the tensile armour wires. The presence of water in the annulus will affect impedance readings of the tensile armour wires. Therefore, the ingress of water into the annulus may also be detected by the electrical monitoring methods disclosed in this application, as changes in the impedance of the first tensile armour wire 304 will also be detected due to the presence of water in the annulus. The ingress of water into the annulus results in an impedance change that is different to the change resulting from corrosion to the first tensile armour wire 304, and consequently the two events may be distinguished from one another. Further, if it is known that water has entered the annulus layer, its effect on impedance measurements may be discounted if these are known through analysis of data collected using the present disclosure.

As explained with reference to earlier figures, the first tensile armour wire 304 may be connected to the measurement device 308 as part of a circuit including other tensile armour wires or sensing wires 502 provided inside the annulus cavity. Therefore it may be advantageous to provide these components at the time of manufacture, as it may be difficult or impossible to adapt existing pipes to include some elements of the examples discussed above such as the conductive rod 402 or sensing wires 502 which are provided inside the pipe body, which may be submerged in seawater.

A method of manufacturing a pipeline apparatus according to any of the examples described above includes forming the pipeline apparatus according to the examples discussed in relation to Figures 1 and 2, and providing either a conductive rod 402 to short one of the tensile armour wires to at least one other tensile armour wire, or electrical wires 502 to configure a circuit into a four wire return configuration in order to form a circuit including at least one of the tensile armour wires and the measurement device 308, such that the measurement device 308 can measure the impedance of the at least one tensile armour wire. The four-wire return configuration may also be known as four terminal sensing, four wire sensing, four-point probing, or Kelvin sensing.

Various modifications to the detailed arrangements as described above are possible. For example, the skilled person would understand that any of Figures 3 to 5 may be combined with the techniques described in relation to Figure 7 of using varied electrical currents including alternating currents with different frequencies.

Further, the skilled person would understand that the monitoring techniques and apparatuses described herein are not required to be used in isolation, and may be combined with other techniques such as gas vent monitoring and subsea ultra-sonics. These techniques may be combined to obtain a higher confidence in measured impedance values and estimated corrosion, and as part of a calibration process to correlate impedance values or variations with types of corrosion or defects in the pipe.

It has been discussed that one tensile armour wire in a pipe body is monitored using the electrical monitoring techniques of the present disclosure, and that corrosion of said single wire is indicative of corrosion or defects of other wires in the pipe body, which are subject to similar conditions as the monitored wire and are therefore likely to corrode in a similar fashion and with a similar rate. However, the skilled person would understand that in some examples of the present disclosure more than a single wire may be monitored. For example, the measurement device 308 may be coupled to a plurality of different tensile armour wires separately, in order to avoid measurements that are not indicative of the average impedance of the tensile armour wires in the pipe body.

With the above-described arrangement, it is possible to monitor the condition of a tensile armour wire within a pipe body for corrosion or other defects. Advantageously, access to the pipe body is only required at the end fitting 404, which is typically provided at an accessible site such as a ship or a sea level site. The condition of the pipe may therefore be monitored during use, and use of the pipe is not interrupted by the monitoring.

A further advantage of the present disclosure is to facilitate long term or continuous monitoring of the pipe, due to access to the pipe only being required at end fittings and the operation of the pipe not being affected by the monitoring process. Models of corrosion of the tensile armour wires may be improved and predictions may be made as to the expected lifetime of the pipeline.

Advantageously, the tensile armour wires are directed measured by the monitoring techniques of the present disclosure, as opposed to known techniques such as gas vent monitoring which measures exhaust gases from the annulus but not the internal effects of corrosion.

It will be clear to a person skilled in the art that features described in relation to any of the examples described above can be applicable interchangeably between the different examples. The examples described above are examples to illustrate various features of the disclosure.

## Claims

1. A pipeline apparatus comprising:
a pipe body including:
an annular cavity (310) between annular innermost and outermost fluid impermeable barrier layers; and
a plurality of armour wires (302, 304) extending along at least part of the length of the pipe body in the annular cavity (310), the plurality of armour wires (302, 304) including a first armour wire (304) electrically isolated from the other armour wires (302) along at least part of the length of the armour wires (302, 304); and
a measurement device (308) arranged to electrically couple to the first armour wire (304) at a first end of the pipe body, and to measure the electrical impedance of the first armour wire (304);
wherein the first armour wire (304) is electrically connected to at least one other armour wire (302) at a part of the pipe body distal to the first end of the pipe body; and
wherein the measurement device (308) is further arranged to electrically couple to the at least one other armour wire (302) at the first end of the pipe body, such that impedance is measured through a circuit comprising the first armour wire (304) and the at least one other armour wire (302) connected in series,
wherein variation of the electrical impedance of the first armour wire (304) is indicative of a defect of the first armour wire (304).

2. The pipeline apparatus according to claim 1, further comprising at least one insulation member arranged to insulate the first armour wire (304) from the remainder of the plurality of armour wires (302) along at least part of its length.

3. The pipeline apparatus according to claim 1 or claim 2, wherein the measurement device (308) is configured to supply direct current or variable frequency alternating current to the first armour wire (304).

4. The pipeline apparatus according to any of claims 1 to 3, further comprising an end fitting (404) coupled to the first end of the pipe body, wherein the measurement device (308) couples to the first armour wire (304) through the end fitting (404).

5. A pipeline apparatus comprising:
a pipe body including:
an annular cavity (310) between annular innermost and outermost fluid impermeable barrier layers; and
a plurality of armour wires (302, 304) extending along at least part of the length of the pipe body in the annular cavity (310), the plurality of armour wires (302, 304) including a first armour wire (304) electrically isolated from the other armour wires (302) along at least part of the length of the armour wires (302, 304); and
a measurement device (308) arranged to electrically couple to the first armour wire (304) at a first end of the pipe body, and to measure the electrical impedance of the first armour wire (304); and
sensing wires (502) connected to the first armour wire (304) at the first end of the pipe body and a part of the pipe body distal to the first end of the pipe body, such that impedance is measured through a circuit formed by sensing wires (502) and the first armour wire (304),
wherein the sensing wires (502) are arranged in a four-terminal sensing configuration, and
wherein variation of the electrical impedance of the first armour wire (304) is indicative of a defect of the first armour wire (304).

6. The pipeline apparatus according to claim 5, wherein the sensing wires (502) are provided adjacent to and parallel with the first armour wire (304) in the annular cavity (310).

7. The pipeline apparatus according to claim 6, wherein the measurement device (308) comprises a current sensor arranged to measure a current through the first armour wire (304) and a voltage sensor arranged to measure a voltage across the first armour wire (304).

8. A method of monitoring a condition of an armour wire provided in a pipeline apparatus according to any of claims 1 to 4, the method comprising:
coupling a measurement device (308) to a first armour wire (304) among a plurality of armour wires (302, 304) extending along at least part of the length of a pipe body in an annular cavity (310) of the pipe body of the pipeline apparatus and electrically isolated from the other armour wires (302) along at least part of the length of the armour wires (302, 304), the annular cavity (310) being defined between annular innermost and outermost fluid impermeable barrier layers, the measurement device (308) being coupled to the first armour wire (304) at a first end of the pipe body;
electrically connecting the first armour wire (304) to at least one other armour wire (302) at a part of the pipe body distal to the first end of the pipe body;
electrically coupling the measurement device (308) to the at least one other armour wire (302) at the first end of the pipe body, such that impedance is measured through a circuit comprising the first armour wire (304) and the at least one other armour wire (302) connected in series; and
measuring the impedance of the first armour wire (304),
wherein variation of the electrical impedance of the first armour wire (304) is indicative of a defect of the first armour wire (304).

9. The method of claim 8, wherein the current supplied to the first armour wire (304) is direct current or alternating current.

10. The method of claim 8, further comprising:
varying the frequency of the current supplied to the first armour wire (304);
measuring the impedance of the first armour wire (304) at two or more different frequencies; and
determining an impedance profile across the cross section of the first armour wire (304).

11. The method of any of claims 8 to 10, further comprising:
determining a rate of change of the impedance of the first armour wire (304).

12. The method of any of claims 9 to 11, further comprising:
identifying a type of defect of the first armour wire (304) based on a frequency of alternating current supplied to the first armour wire (304) and the measured impedance of the first armour wire (304).

13. A method of monitoring a condition of an armour wire provided in a pipeline apparatus according to any of claims 5 to 7, the method comprising:
coupling a measurement device (308) to a first armour wire (304) among a plurality of armour wires (302, 304) extending along at least part of the length of a pipe body in an annular cavity (310) of the pipe body of the pipeline apparatus and electrically isolated from the other armour wires (302) along at least part of the length of the armour wires (302, 304), the annular cavity (310) being defined between annular innermost and outermost fluid impermeable barrier layers, the measurement device (308) being coupled to the first armour wire (304) at a first end of the pipe body;
connecting sensing wires (502) to the first armour wire (304) at the first end of the pipe body and a part of the pipe body distal to the first end of the pipe body, such that impedance is measured through a circuit formed by sensing wires (502) and the first armour wire (304); and
measuring the impedance of the first armour wire (304),
wherein the sensing wires (502) are arranged in a four-terminal sensing configuration, and
wherein variation of the electrical impedance of the first armour wire (304) is indicative of a defect of the first armour wire (304).

14. A method of forming a pipeline apparatus according to any of claims 1 to 4, the method comprising:
providing a pipe body including:
an annular cavity (310) between annular innermost and outermost fluid impermeable barrier layers; and
a plurality of armour wires (302, 304) extending along at least part of the length of the pipe body in the annular cavity (310), the plurality of armour wires (302, 304) including a first armour wire (304) electrically isolated from the other armour wires (302) along at least part of the length of the armour wires (302, 304);
coupling a measurement device (308) to the first armour wire (304) at a first end of the pipe body, the measurement device (308) being arranged to measure the electrical impedance of the first armour wire (304);
electrically connecting the first armour wire (304) to at least one other armour wire (302) at a part of the pipe body distal to the first end of the pipe body; and
electrically coupling the measurement device (308) to the at least one other armour wire (302) at the first end of the pipe body, such that impedance is measured through a circuit comprising the first armour wire (304) and the at least one other armour wire (302) connected in series,
wherein variation of the electrical impedance of the first armour wire (304) is indicative of a defect of the first armour wire (304).

15. A method of forming a pipeline apparatus, according to any of claims 5 to 7, the method comprising:
providing a pipe body including:
an annular cavity (310) between annular innermost and outermost fluid impermeable barrier layers; and
a plurality of armour wires (302, 304) extending along at least part of the length of the pipe body in the annular cavity (310), the plurality of armour wires (302, 304) including a first armour wire (304) electrically isolated from the other armour wires (302) along at least part of the length of the armour wires (302, 304);
coupling a measurement device (308) to the first armour wire (304) at a first end of the pipe body, the measurement device (308) being arranged to measure the electrical impedance of the first armour wire (304); and
connecting sensing wires (502) to the first armour wire (304) at the first end of the pipe body and a part of the pipe body distal to the first end of the pipe body, such that impedance is measured through a circuit formed by sensing wires (502) and the first armour wire (304),
wherein the sensing wires (502) are arranged in a four-terminal sensing configuration, and
wherein variation of the electrical impedance of the first armour wire (304) is indicative of a defect of the first armour wire (304).

## Patentansprüche

1. Rohrleitungseinrichtung, umfassend:
einen Rohrkörper, einschließlich:
eines ringförmigen Hohlraums (310) zwischen der innersten und der äußersten ringförmigen fluidundurchlässigen Barriereschicht; und
einer Vielzahl von Armierungsdrähten (302, 304), die sich entlang mindestens eines Teils der Länge des Rohrkörpers in dem ringförmigen Hohlraum (310) erstrecken, die Vielzahl von Armierungsdrähten (302, 304) einschließlich eines ersten Armierungsdrahts (304), der entlang mindestens eines Teils der Länge der Armierungsdrähte (302, 304) von den anderen Armierungsdrähten (302) elektrisch isoliert ist; und
eine Messvorrichtung (308), die angeordnet ist, um an einem ersten Ende des Rohrkörpers mit dem ersten Armierungsdraht (304) elektrisch gekoppelt zu werden und um die elektrische Impedanz des ersten Armierungsdrahts (304) zu messen;
wobei der erste Armierungsdraht (304) mit mindestens einem anderen Armierungsdraht (302) an einem Teil des Rohrkörpers distal des ersten Endes des Rohrkörpers elektrisch verbunden ist; und
wobei die Messvorrichtung (308) ferner angeordnet ist, um an dem ersten Ende des Rohrkörpers mit dem mindestens einen anderen Armierungsdraht (302) derart elektrisch gekoppelt zu werden, dass die Impedanz durch einen Schaltkreis gemessen wird, umfassend den ersten Armierungsdraht (304) und den mindestens einen anderen Armierungsdraht (302) in Reihe geschaltet,
wobei eine Variation der elektrischen Impedanz des ersten Armierungsdrahts (304) auf einen Defekt des ersten Armierungsdrahts (304) hinweist.

2. Rohrleitungseinrichtung nach Anspruch 1, ferner umfassend mindestens ein Isolierelement, das angeordnet ist, um den ersten Armierungsdraht (304) entlang mindestens eines Teils seiner Länge von dem Rest der Vielzahl von Armierungsdrähten (302) zu isolieren.

3. Rohrleitungseinrichtung nach Anspruch 1 oder 2, wobei die Messvorrichtung (308) konfiguriert ist, um dem ersten Armierungsdraht (304) Gleichstrom oder Wechselstrom mit variabler Frequenz zuzuführen.

4. Rohrleitungseinrichtung nach einem der Ansprüche 1 bis 3, ferner umfassend ein Endstück (404), das mit dem ersten Ende des Rohrkörpers gekoppelt ist, wobei die Messvorrichtung (308) durch das Endstück (404) an den ersten Armierungsdraht (304) gekoppelt wird.

5. Rohrleitungseinrichtung, umfassend:
einen Rohrkörper, einschließlich:
eines ringförmigen Hohlraums (310) zwischen der innersten und der äußersten ringförmigen fluidundurchlässigen Barriereschicht; und
einer Vielzahl von Armierungsdrähten (302, 304), die sich entlang mindestens eines Teils der Länge des Rohrkörpers in dem ringförmigen Hohlraum (310) erstrecken, die Vielzahl von Armierungsdrähten (302, 304) einschließlich eines ersten Armierungsdrahts (304), der entlang mindestens eines Teils der Länge der Armierungsdrähte (302, 304) von den anderen Armierungsdrähten (302) elektrisch isoliert ist; und
eine Messvorrichtung (308), die angeordnet ist, um an einem ersten Ende des Rohrkörpers mit dem ersten Armierungsdraht (304) elektrisch gekoppelt zu werden und um die elektrische Impedanz des ersten Armierungsdrahts (304) zu messen; und
Sensordrähte (502), die mit dem ersten Armierungsdraht (304) an dem ersten Ende des Rohrkörpers und einem Teil des Rohrkörpers distal zu dem ersten Ende des Rohrkörpers derart verbunden sind, dass die Impedanz durch einen Schaltkreis gemessen wird, der durch die Sensordrähte (502) und den ersten Armierungsdraht (304) ausgebildet wird,
wobei die Sensordrähte (502) in einer Vierpolsensorkonfiguration angeordnet sind, und
wobei die Variation der elektrischen Impedanz des ersten Armierungsdrahts (304) auf einen Defekt des ersten Armierungsdrahts (304) hinweist.

6. Rohrleitungseinrichtung nach Anspruch 5, wobei die Sensordrähte (502) neben und parallel zu dem ersten Armierungsdraht (304) in dem ringförmigen Hohlraum (310) bereitgestellt sind.

7. Rohrleitungseinrichtung nach Anspruch 6, wobei die Messvorrichtung (308) einen Stromsensor, der angeordnet ist, um einen Strom durch den ersten Armierungsdraht (304) zu messen, und einen Spannungssensor, der angeordnet ist, um eine Spannung über dem ersten Armierungsdraht (304) zu messen, umfasst.

8. Verfahren zum Überwachen eines Zustands eines Armierungsdrahts, der in einer Rohrleitungseinrichtung nach einem der Ansprüche 1 bis 4 bereitgestellt ist, das Verfahren umfassend:
Koppeln einer Messvorrichtung (308) mit einem ersten Armierungsdraht (304) aus einer Vielzahl von Armierungsdrähten (302, 304), die sich entlang mindestens eines Teils der Länge eines Rohrkörpers in einem ringförmigen Hohlraum (310) des Rohrkörpers der Rohrleitungseinrichtung erstrecken und entlang mindestens eines Teils der Länge der Armierungsdrähte (302, 304) von den anderen Armierungsdrähten (302) elektrisch isoliert sind, wobei der ringförmige Hohlraum (310) zwischen der innersten und der äußersten ringförmigen fluidundurchlässigen Barriereschicht definiert ist, die Messvorrichtung (308) an einem ersten Ende des Rohrkörpers mit dem ersten Armierungsdraht (304) gekoppelt ist;
elektrisches Verbinden des ersten Armierungsdrahts (304) mit mindestens einem anderen Armierungsdraht (302) an einem Teil des Rohrkörpers distal zu dem ersten Ende des Rohrkörpers;
elektrisches Koppeln der Messvorrichtung (308) mit dem mindestens einen anderen Armierungsdraht (302) an dem ersten Ende des Rohrkörpers derart, dass die Impedanz durch einen Schaltkreis gemessen wird, umfassend den ersten Armierungsdraht (304) und den mindestens einen anderen Armierungsdraht (302) in Reihe geschaltet; und
Messen der Impedanz des ersten Armierungsdrahts (304),
wobei die Variation der elektrischen Impedanz des ersten Armierungsdrahts (304) auf einen Defekt des ersten Armierungsdrahts (304) hinweist.

9. Verfahren nach Anspruch 8, wobei der Strom, der dem ersten Armierungsdraht (304) zugeführt wird, Gleichstrom oder Wechselstrom ist.

10. Verfahren nach Anspruch 8, ferner umfassend:
Variieren der Frequenz des Stroms, der dem ersten Armierungsdraht (304) zugeführt wird;
Messen der Impedanz des ersten Armierungsdrahts (304) bei zwei oder mehr verschiedenen Frequenzen; und
Bestimmen eines Impedanzprofils über den Querschnitt des ersten Armierungsdrahts (304).

11. Verfahren nach einem der Ansprüche 8 bis 10, ferner umfassend:
Bestimmen einer Änderungsrate der Impedanz des ersten Armierungsdrahts (304).

12. Verfahren nach einem der Ansprüche 9 bis 11, ferner umfassend:
Identifizieren einer Art von Defekt des ersten Armierungsdrahts (304) basierend auf einer Frequenz des Wechselstroms, der dem ersten Armierungsdraht (304) zugeführt wird, und der gemessenen Impedanz des ersten Armierungsdrahts (304).

13. Verfahren zum Überwachen eines Zustands eines Armierungsdrahts, der in einer Rohrleitungseinrichtung nach einem der Ansprüche 5 bis 7 bereitgestellt ist, das Verfahren umfassend:
Koppeln einer Messvorrichtung (308) mit einem ersten Armierungsdraht (304) aus einer Vielzahl von Armierungsdrähten (302, 304), die sich entlang mindestens eines Teils der Länge eines Rohrkörpers in einem ringförmigen Hohlraum (310) des Rohrkörpers der Rohrleitungseinrichtung erstrecken und entlang mindestens eines Teils der Länge der Armierungsdrähte (302, 304) von den anderen Armierungsdrähten (302) elektrisch isoliert sind, wobei der ringförmige Hohlraum (310) zwischen der innersten und der äußersten ringförmigen fluidundurchlässigen Barriereschicht definiert ist, die Messvorrichtung (308) an einem ersten Ende des Rohrkörpers mit dem ersten Armierungsdraht (304) gekoppelt ist;
Verbinden von Sensordrähten (502) mit dem ersten Armierungsdraht (304) an dem ersten Ende des Rohrkörpers und einem Teil des Rohrkörpers distal zu dem ersten Ende des Rohrkörpers derart, dass die Impedanz durch einen Schaltkreis gemessen wird, der durch Sensordrähte (502) und den ersten Armierungsdraht (304) ausgebildet ist; und
Messen der Impedanz des ersten Armierungsdrahts (304),
wobei die Sensordrähte (502) in einer Vierpolsensorkonfiguration angeordnet sind, und
wobei die Variation der elektrischen Impedanz des ersten Armierungsdrahts (304) auf einen Defekt des ersten Armierungsdrahts (304) hinweist.

14. Verfahren zum Ausbilden einer Rohrleitungseinrichtung nach einem der Ansprüche 1 bis 4, das Verfahren umfassend:
Bereitstellen eines Rohrkörpers, einschließlich:
eines ringförmigen Hohlraums (310) zwischen der innersten und der äußersten ringförmigen fluidundurchlässigen Barriereschicht; und
einer Vielzahl von Armierungsdrähten (302, 304), die sich entlang mindestens eines Teils der Länge des Rohrkörpers in dem ringförmigen Hohlraum (310) erstrecken, die Vielzahl von Armierungsdrähten (302, 304) einschließlich eines ersten Armierungsdrahts (304), der entlang mindestens eines Teils der Länge der Armierungsdrähte (302, 304) von den anderen Armierungsdrähten (302) elektrisch isoliert ist;
Koppeln einer Messvorrichtung (308) mit dem ersten Armierungsdraht (304) an einem ersten Ende des Rohrkörpers, wobei die Messvorrichtung (308) angeordnet ist, um die elektrische Impedanz des ersten Armierungsdrahts (304) zu messen;
elektrisches Verbinden des ersten Armierungsdrahts (304) mit mindestens einem anderen Armierungsdraht (302) an einem Teil des Rohrkörpers distal zu dem ersten Ende des Rohrkörpers; und
elektrisches Koppeln der Messvorrichtung (308) mit dem mindestens einen anderen Armierungsdraht (302) an dem ersten Ende des Rohrkörpers derart, dass die Impedanz durch einen Schaltkreis gemessen wird, umfassend den ersten Armierungsdraht (304) und den mindestens einen anderen Armierungsdraht (302) in Reihe geschaltet,
wobei die Variation der elektrischen Impedanz des ersten Armierungsdrahts (304) auf einen Defekt des ersten Armierungsdrahts (304) hinweist.

15. Verfahren zum Ausbilden einer Rohrleitungseinrichtung nach einem der Ansprüche 5 bis 7, das Verfahren umfassend:
Bereitstellen eines Rohrkörpers, einschließlich:
eines ringförmigen Hohlraums (310) zwischen der innersten und der äußersten ringförmigen fluidundurchlässigen Barriereschicht; und
einer Vielzahl von Armierungsdrähten (302, 304), die sich entlang mindestens eines Teils der Länge des Rohrkörpers in dem ringförmigen Hohlraum (310) erstrecken, die Vielzahl von Armierungsdrähten (302, 304) einschließlich eines ersten Armierungsdrahts (304), der entlang mindestens eines Teils der Länge der Armierungsdrähte (302, 304) von den anderen Armierungsdrähten (302) elektrisch isoliert ist;
Koppeln einer Messvorrichtung (308) mit dem ersten Armierungsdraht (304) an einem ersten Ende des Rohrkörpers, wobei die Messvorrichtung (308) angeordnet ist, um die elektrische Impedanz des ersten Armierungsdrahts (304) zu messen; und
Verbinden von Sensordrähten (502) mit dem ersten Armierungsdraht (304) an dem ersten Ende des Rohrkörpers und einem Teil des Rohrkörpers, der distal zu dem ersten Ende des Rohrkörpers derart liegt, dass die Impedanz durch einen Schaltkreis gemessen wird, der durch Sensordrähte (502) und den ersten Armierungsdraht (304) ausgebildet ist;
wobei die Sensordrähte (502) in einer Vierpolsensorkonfiguration angeordnet sind, und
wobei die Variation der elektrischen Impedanz des ersten Armierungsdrahts (304) auf einen Defekt des ersten Armierungsdrahts (304) hinweist.

## Revendications

1. Appareil de canalisation comprenant :
un corps de tuyau comportant :
une cavité annulaire (310) entre des couches barrières annulaires imperméables aux fluides les plus internes et les plus externes ; et
une pluralité de fils de blindage (302, 304) s'étendant le long d'au moins une partie de la longueur du corps de tuyau dans la cavité annulaire (310), la pluralité de fils de blindage (302, 304) comportant un premier fil de blindage (304) isolé électriquement des autres fils de blindage (302) le long d'au moins une partie de la longueur des fils de blindage (302, 304) ; et
un dispositif de mesure (308) conçu pour se coupler électriquement au premier fil de blindage (304) au niveau d'une première extrémité du corps de tuyau, et pour mesurer l'impédance électrique du premier fil de blindage (304) ;
dans lequel le premier fil de blindage (304) est connecté électriquement à au moins un autre fil de blindage (302) au niveau d'une partie du corps de tuyau distale par rapport à la première extrémité du corps de tuyau ; et
dans lequel le dispositif de mesure (308) est en outre conçu pour se coupler électriquement à l'au moins un autre fil de blindage (302) au niveau de la première extrémité du corps de tuyau, de sorte qu'une impédance est mesurée à travers un circuit comprenant le premier fil de blindage (304) et l'au moins un autre fil de blindage (302) connectés en série,
dans lequel une variation de l'impédance électrique du premier fil de blindage (304) indique un défaut du premier fil de blindage (304).

2. Appareil de canalisation selon la revendication 1, comprenant en outre au moins un élément d'isolation conçu pour isoler le premier fil de blindage (304) du reste de la pluralité de fils de blindage (302) le long d'au moins une partie de sa longueur.

3. Appareil de canalisation selon la revendication 1 ou la revendication 2, dans lequel le dispositif de mesure (308) est configuré pour fournir un courant continu ou un courant alternatif à fréquence variable au premier fil de blindage (304).

4. Appareil de canalisation selon l'une quelconque des revendications 1 à 3, comprenant en outre un raccord d'extrémité (404) accouplé à la première extrémité du corps de tuyau, dans lequel le dispositif de mesure (308) se couple au premier fil de blindage (304) à travers le raccord d'extrémité (404).

5. Appareil de canalisation comprenant :
un corps de tuyau comportant :
une cavité annulaire (310) entre des couches barrières annulaires imperméables aux fluides les plus internes et les plus externes ; et
une pluralité de fils de blindage (302, 304) s'étendant le long d'au moins une partie de la longueur du corps de tuyau dans la cavité annulaire (310), la pluralité de fils de blindage (302, 304) comportant un premier fil de blindage (304) isolé électriquement des autres fils de blindage (302) le long d'au moins une partie de la longueur des fils de blindage (302, 304) ; et
un dispositif de mesure (308) conçu pour se coupler électriquement au premier fil de blindage (304) au niveau d'une première extrémité du corps de tuyau, et pour mesurer l'impédance électrique du premier fil de blindage (304) ; et
des fils de détection (502) connectés au premier fil de blindage (304) au niveau de la première extrémité du corps de tuyau et au niveau d'une partie du corps de tuyau distale par rapport à la première extrémité du corps de tuyau, de sorte qu'une impédance est mesurée à travers un circuit formé par des fils de détection (502) et le premier fil de blindage (304),
dans lequel les fils de détection (502) sont disposés dans une configuration de détection à quatre bornes, et
dans lequel une variation de l'impédance électrique du premier fil de blindage (304) indique un défaut du premier fil de blindage (304).

6. Appareil de canalisation selon la revendication 5, dans lequel les fils de détection (502) sont disposés adjacents et parallèles au premier fil de blindage (304) dans la cavité annulaire (310).

7. Appareil de canalisation selon la revendication 6, dans lequel le dispositif de mesure (308) comprend un capteur de courant conçu pour mesurer un courant à travers le premier fil de blindage (304) et un capteur de tension conçu pour mesurer une tension à travers le premier fil de blindage (304).

8. Procédé de surveillance d'un état d'un fil de blindage prévu dans un appareil de canalisation selon l'une quelconque des revendications 1 à 4, le procédé comprenant :
le couplage d'un dispositif de mesure (308) à un premier fil de blindage (304) parmi une pluralité de fils de blindage (302, 304) s'étendant le long d'au moins une partie de la longueur d'un corps de tuyau dans une cavité annulaire (310) du corps de tuyau de l'appareil de canalisation et isolé électriquement des autres fils de blindage (302) le long d'au moins une partie de la longueur des fils de blindage (302, 304), la cavité annulaire (310) étant définie entre des couches barrières annulaires imperméables aux fluides les plus internes et les plus externes, le dispositif de mesure (308) étant couplé au premier fil de blindage (304) au niveau d'une première extrémité du corps de tuyau ;
la connexion électrique du premier fil de blindage (304) à au moins un autre fil de blindage (302) au niveau d'une partie du corps de tuyau distale par rapport à la première extrémité du corps de tuyau ;
le couplage électrique du dispositif de mesure (308) à l'au moins un autre fil de blindage (302) au niveau de la première extrémité du corps de tuyau, de sorte qu'une impédance est mesurée à travers un circuit comprenant le premier fil de blindage (304) et l'au moins un autre fil de blindage (302) connectés en série ; et
la mesure de l'impédance du premier fil de blindage (304),
dans lequel une variation de l'impédance électrique du premier fil de blindage (304) indique un défaut du premier fil de blindage (304).

9. Procédé selon la revendication 8, dans lequel le courant fourni au premier fil de blindage (304) est un courant continu ou un courant alternatif.

10. Procédé selon la revendication 8, comprenant en outre :
la variation de la fréquence du courant fourni au premier fil de blindage (304) ;
la mesure de l'impédance du premier fil de blindage (304) à deux fréquences différentes ou plus ; et
la détermination d'un profil d'impédance à travers la section transversale du premier fil de blindage (304).

11. Procédé selon l'une quelconque des revendications 8 à 10, comprenant en outre :
la détermination d'un taux de variation de l'impédance du premier fil de blindage (304).

12. Procédé selon l'une quelconque des revendications 9 à 11, comprenant en outre :
l'identification d'un type de défaut du premier fil de blindage (304) sur la base d'une fréquence de courant alternatif fourni au premier fil de blindage (304) et de l'impédance mesurée du premier fil de blindage (304).

13. Procédé de surveillance d'un état d'un fil de blindage prévu dans un appareil de canalisation selon l'une quelconque des revendications 5 à 7, le procédé comprenant :
le couplage d'un dispositif de mesure (308) à un premier fil de blindage (304) parmi une pluralité de fils de blindage (302, 304) s'étendant le long d'au moins une partie de la longueur d'un corps de tuyau dans une cavité annulaire (310) du corps de tuyau de l'appareil de canalisation et isolé électriquement des autres fils de blindage (302) le long d'au moins une partie de la longueur des fils de blindage (302, 304), la cavité annulaire (310) étant définie entre des couches barrières annulaires imperméables aux fluides les plus internes et les plus externes, le dispositif de mesure (308) étant couplé au premier fil de blindage (304) au niveau d'une première extrémité du corps de tuyau ;
la connexion de fils de détection (502) au premier fil de blindage (304) au niveau de la première extrémité du corps de tuyau et au niveau d'une partie du corps de tuyau distale par rapport à la première extrémité du corps de tuyau, de sorte qu'une impédance est mesurée à travers un circuit formé par des fils de détection (502) et le premier fil de blindage (304) ; et
la mesure de l'impédance du premier fil de blindage (304),
dans lequel les fils de détection (502) sont disposés dans une configuration de détection à quatre bornes, et
dans lequel une variation de l'impédance électrique du premier fil de blindage (304) indique un défaut du premier fil de blindage (304).

14. Procédé de formation d'un appareil de canalisation selon l'une quelconque des revendications 1 à 4, le procédé comprenant :
la fourniture d'un corps de tuyau comportant :
une cavité annulaire (310) entre des couches barrières annulaires imperméables aux fluides les plus internes et les plus externes ; et
une pluralité de fils de blindage (302, 304) s'étendant le long d'au moins une partie de la longueur du corps de tuyau dans la cavité annulaire (310), la pluralité de fils de blindage (302, 304) comportant un premier fil de blindage (304) isolé électriquement des autres fils de blindage (302) le long d'au moins une partie de la longueur des fils de blindage (302, 304) ;
le couplage d'un dispositif de mesure (308) au premier fil de blindage (304) au niveau d'une première extrémité du corps de tuyau, le dispositif de mesure (308) étant conçu pour mesurer l'impédance électrique du premier fil de blindage (304) ;
la connexion électrique du premier fil de blindage (304) à au moins un autre fil de blindage (302) au niveau d'une partie du corps de tuyau distale par rapport à la première extrémité du corps de tuyau ; et
le couplage électrique du dispositif de mesure (308) à l'au moins un autre fil de blindage (302) au niveau de la première extrémité du corps de tuyau, de sorte qu'une impédance est mesurée à travers un circuit comprenant le premier fil de blindage (304) et l'au moins un autre fil de blindage (302) connectés en série,
dans lequel une variation de l'impédance électrique du premier fil de blindage (304) indique un défaut du premier fil de blindage (304).

15. Procédé de formation d'un appareil de canalisation, selon l'une quelconque des revendications 5 à 7, le procédé comprenant :
la fourniture d'un corps de tuyau comportant :
une cavité annulaire (310) entre des couches barrières annulaires imperméables aux fluides les plus internes et les plus externes ; et
une pluralité de fils de blindage (302, 304) s'étendant le long d'au moins une partie de la longueur du corps de tuyau dans la cavité annulaire (310), la pluralité de fils de blindage (302, 304) comportant un premier fil de blindage (304) isolé électriquement des autres fils de blindage (302) le long d'au moins une partie de la longueur des fils de blindage (302, 304) ;
le couplage d'un dispositif de mesure (308) au premier fil de blindage (304) au niveau d'une première extrémité du corps de tuyau, le dispositif de mesure (308) étant conçu pour mesurer l'impédance électrique du premier fil de blindage (304) ; et
la connexion de fils de détection (502) au premier fil de blindage (304) au niveau de la première extrémité du corps de tuyau et au niveau d'une partie du corps de tuyau distale par rapport à la première extrémité du corps de tuyau, de sorte qu'une impédance est mesurée à travers un circuit formé par des fils de détection (502) et le premier fil de blindage (304),
dans lequel les fils de détection (502) sont disposés dans une configuration de détection à quatre bornes, et
dans lequel une variation de l'impédance électrique du premier fil de blindage (304) indique un défaut du premier fil de blindage (304).
